# EUROPEAN PATENT APPLICATION

(11) **EP 1 513 112 A2**
(43) Date of publication of application: **09.03.2005**
(21) Application number: 04255368.5
(22) Date of filing: 03.09.2004
(51) Int. Cl.: G07D 7/00, G07D 7/20

(54) **Printed material verification**

(30) Priority: 08.09.2003 US 657783
(71) Applicant: Hewlett-Packard Development Company, L.P., Houston, TX 77070 (US)
(72) Inventor: Samii, Mohammad M., La Jolla, CA 92037 (US); Van Veen, Mark A., Cardiff By The Sea, CA 92007 (US); Webb, Steven L., Murrieta, CA 92562 (US); Poon, Lily, San Diego, CA 92122 (US); Taylor, Clark Noble, La Jolla, CA 92037 (US)
(74) Representative: Jackson, Richard Eric

(57) **Abstract**

Apparatus and methods are provided. Print-mark data corresponding to a print mark (124) on a hardcopy of printed material (120) is extracted from data corresponding to the hardcopy of printed material (120). The print-mark data is analyzed to quantify printing artifacts of the print mark (124) resulting from printing variations occurring during printing of the hardcopy of printed material (120). The quantified printing artifacts are encrypted, and the encrypted printing artifacts are encoded into data corresponding to a machine-readable identifier (152). The machine-readable identifier (152) is printed from the data corresponding to the machine-readable identifier (152) on the hardcopy of printed material (120).

## Description

### BACKGROUND

Counterfeiting printed materials, such as paper money, coupons, payroll checks, etc. has been going on for a long time. More recently, product packaging, such as is used for packaging counterfeited pharmaceuticals, software, or any other product, has fallen prey to counterfeiting. Typical methods for combating counterfeiting include disposing identifiers, such as watermarks or other patterns that are difficult to print on printed materials for visual inspection, e.g., by people who dispense or receive printed materials, such as salespeople, bank tellers, or the like. The idea here is to detect anomalies in an identifier or the absence of the identifier. However, the people who dispense or receive the printed materials often do not look for such identifiers. Moreover, many identifiers can be copied to a degree that is undetectable by visual inspection.

### SUMMARY

Various embodiments of the present invention provide apparatus and methods that use print mark data for verifying printed material. One embodiment of the present invention provides a method for producing machine-verifiable printed material. The method includes extracting print-mark data corresponding to a print mark on a hardcopy of printed material from data corresponding to the hardcopy of printed material. The method includes analyzing the print-mark data to quantify printing artifacts of the print mark resulting from printing variations occurring during printing of the hardcopy of printed material. Encrypting the quantified printing artifacts and encoding the encrypted printing artifacts into data corresponding to a machine-readable identifier are also included in the method. The method further includes printing the machine-readable identifier from the data corresponding to the machine-readable identifier on the hardcopy of printed material.

### DESCRIPTION OF THE DRAWINGS

Figure 1 is a block diagram of a printing system according to an embodiment of the present invention.

Figure 2 is a flowchart of a method according to another embodiment of the present invention.

Figure 3 is a block diagram illustrating another embodiment of the present invention.

Figure 4 is a flowchart of a method according to another embodiment of the present invention.

### DETAILED DESCRIPTION

In the following detailed description of the present embodiments, reference is made to the accompanying drawings that form a part hereof, and in which is shown by way of illustration specific embodiments in which the invention may be practiced. These embodiments are described in sufficient detail to enable those skilled in the art to practice the invention, and it is to be understood that other embodiments may be utilized and that process, electrical or mechanical changes may be made without departing from the scope of the present invention. The following detailed description is, therefore, not to be taken in a limiting sense, and the scope of the present invention is defined only by the appended claims and equivalents thereof.

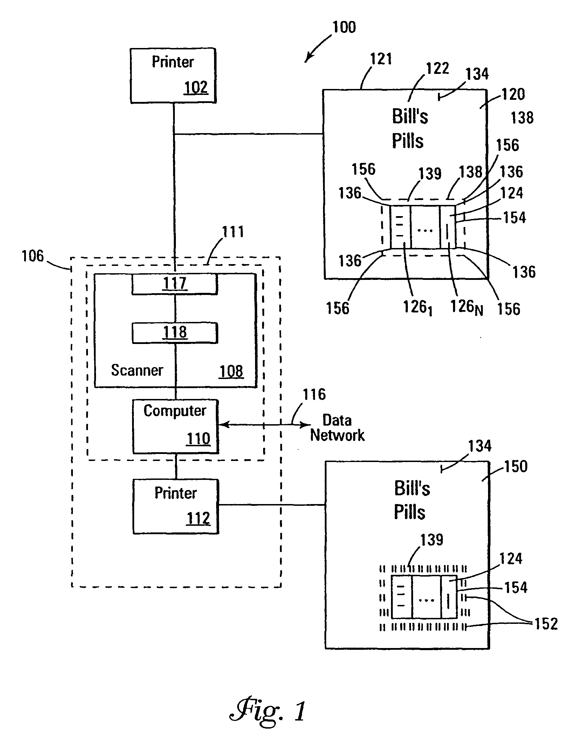

Figure 1 is a block diagram of a printing system 100 for printing machine-verifiable printed material, e.g., packaging for commercial products, such as pharmaceuticals, computer software, etc., coupons, or the like, according to an embodiment of the present invention. Printing system 100 includes a printer 102, e.g., an analog or digital printer. For various embodiments, printer 102 can be a printing press, an ink-jet printer, an electrophotographic printer, a piezoelectric printer, a lithographic printer, an offset printer, a flexographic printer, etc. Printer 102 prints out printed material 120, as shown in Figure 1, such as a package for a commercial product, a coupon, or the like. Printed material 120 includes a printable media 121, such as paper, cardboard, or the like, having images, e,g., text 122 or graphical images ( not shown) printed thereon, such as for identifying or describing a product. Printing system 100 includes an image processing system 106 for producing machine-verifiable printed material 150 from printed material 120, as shown in Figure 1. More specifically, image processing system 106 prints a machine-readable identifier 152, such as a one-dimensional bar code, a two dimensional bar (or dot) code, etc., on printable media 121 of printed material 120 to produce machine-verifiable printed material 150.

The images printed on printable media 121 of printed material 120 also include a print mark 124 that includes various printing patterns. The printing patterns include printing artifacts that result from variations (e.g., from print run to print run) occurring during printing of printed material 120, and in particular of print mark 124, by printer 102. For example, the variations can include variations in dot gain, line width, edge acuity, color, optical density, plate variations, plate-to-plate alignment (or registration) variations, etc. Print mark 124 can be a logo, an engineered mark, or printed text. For one embodiment, print mark 124 is designed to accentuate the various printing artifacts. For example, print mark may include a black line on a white background or a white line on a black background for accentuating edge acuity, a checker pattern to accentuate dot gain, a display of multiple bands of the same color in various shades and widths for accentuating color variation, line width, hue shift, and absolute color, etc. For another embodiment, print mark 124 includes regions 126₁ to 126_{N}, each for accentuating a different printing artifact.

Image processing system 106 of printing system 100 includes a scanner 108 for scanning a hardcopy of printed material 120. For one embodiment, scanner 108 is electrically connected to a computer 110, such as a mainframe computer, a personal computer (PC), network server, or the like. For another embodiment, computer 110 and scanner 108 are integrated to form a scanning system 111, as shown in Figure 1. For yet another embodiment, an interface 116 connects computer 110 to a data network, such as the Internet, a Local Area Network (LAN), etc. Computer 110 is connected to a printer 112, e.g., an ink-jet printer, an electrophotographic printer, a piezoelectric printer, etc., of image processing system 106. For one embodiment, image-processing system 106 is an integrated unit, such as a stand-alone digital copier or printer.

For some embodiments, computer-readable instructions that are supplied to a user of computer 110 on a removable computer-usable medium, such as a compact disc read-only memory (CD-ROM), are, for example, stored on a hard drive of computer 110. The computer-readable instructions cause computer 110 to perform various methods, such as controlling scanner 108 and printer 112. For another embodiment the computer-readable instructions are contained on a static or dynamic random access memory (SRAM or DRAM), electrically-erasable programmable ROM (EEPROM or flash memory), magnetic media, or optical media permanently or removably attached to computer 110.

Scanner 108 includes a scanning unit 117 that converts a hardcopy of printed material 120 into an analog data signal. For one embodiment, scanner 108 has a digitizer 118, such as an analog-to-digital converter, that converts the analog data signal into a digital data signal. The digital data corresponding to printed material 120 is transmitted to computer 110 for processing and analysis. For another embodiment, computer 110 converts the digital data into a printer-usable format, such as a bitmap format, Tag Image File Format (TIFF), Graphics Interchange Format (GIF), etc. For one embodiment, computer 110 converts the digital data corresponding to printed material 120 into gray scale data, such as a gray-scale bitmap.

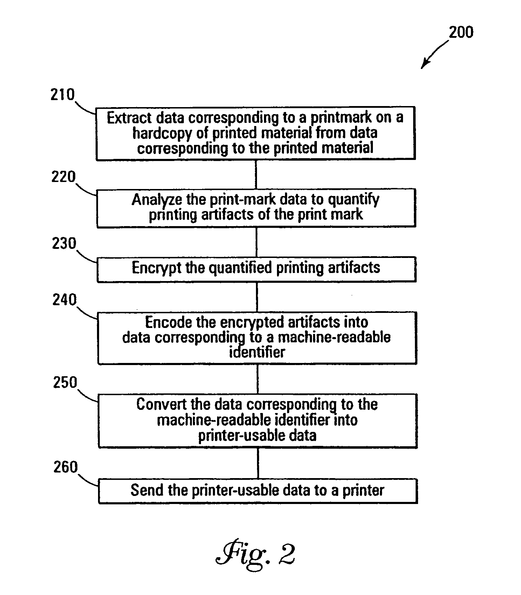

For one embodiment, the computer-readable instructions cause computer 110 to perform a method 200, as illustrated by the flowchart in Figure 2. At block 210, computer 110 extracts data (print-mark data) corresponding to print mark 124 from data corresponding to the hardcopy of printed material 120.

For one embodiment, the computer-readable instructions include position vectors that use a reference mark 134 (Figure 1) or a corner of printed material 120 as an origin. The position vectors specify the location of print mark 124 relative to reference mark 134 or the corner of printed material 120. For example, reference mark 134 or the corner of printed material 120 may be the origin of a coordinate system, e.g., Cartesian coordinate system, and the position vectors row or column vectors having as elements coordinates of corners 136 of print mark 124. Similarly, for other embodiments, position vectors specify the location of a boundary 138 that surrounds print mark 124 to form a region 139 between a periphery 154 of print mark 124 and the boundary 138, as shown in Figure 1. For example, position vectors may have as elements coordinates of the corners 156 of boundary 138. Boundary 138 is shown as a dashed line in that, for some embodiments, this boundary is not displayed on the hardcopy of printed material 120, but rather is part of an electronic representation thereof. As discussed below, for one embodiment, the position vectors are also used for specifying a predetermined location on printed material 120, e.g., region 139, for printing machine-readable identifier 152.

Computer 110 analyzes the print-mark data at block 220 to quantify at least a portion of the print-mark data that corresponds to printing artifacts of print mark 124. For example, computer 110 may quantify dot gain as a percent, line width in inches, edge acuity as a number, etc. For one embodiment, computer 110 converts the data corresponding to the printed material into gray-scale data before analyzing the data. At block 230, computer 110 encrypts the quantified printing artifacts using a private encryption key. Suitable encryption methods include elliptic-key cryptography, RSA (named for its inventors Rivest, Shamir, and Adleman), etc. More specifically, computer 110 converts each of the quantified printing artifacts into a digital representation thereof and then encrypts the digital data.

For another embodiment, the private key is contained in the computer-readable instructions or is generated by the computer-readable instructions. For some embodiments, computer 110 generates a public key that is linked to the private key for decrypting the quantified printing-artifact data encrypted using the private key. For one embodiment, the private and public keys are part of a private/public key (or asymmetric) encryption method. That is, data encrypted with the private key can only be decrypted using the public key and vice versa. For some embodiments, the private and public encryption keys are deactivated after a given period of time, such as a life span of a product.

The encrypted digital data is encoded into data corresponding to machine-readable identifier 152 at block 240. For one embodiment, an electronic representation of a sheet having the same dimensions as printed material 120 is created by computer 110, and the data corresponding to the machine-readable identifier 152 is added to a predetermined location on the blank electronic version corresponding to the predetermined location on printed material 120, e.g., region 139, using the position vectors described above. At block 250, the data corresponding to machine-readable identifier 152 is converted to printer-usable data. For one embodiment, data corresponding to the blank sheet with the machine-readable identifier 152 added thereto is converted to printer-usable data. At block 260, the printer-usable data is sent to printer 112.

For one embodiment, a hardcopy of printed material 120 is fed into printer 112, e.g., from a media tray (not shown) of printer 112 or of image processor 106 when image processor 106 is an integrated unit, and printer 112 prints machine-readable identifier 152 on the hardcopy of printed material 120 to produce machine-verifiable printed material 150. For one embodiment, machine-readable identifier 152 is printed at the predetermined location on printed material 120. For another embodiment, machine-readable identifier 152 is printed adjacent print mark 124, e.g., around periphery 154 of print mark 124 within the region 139. For another embodiment, machine-readable identifier 152 is printed, for example, by infrared or ultraviolet printing and is invisible to the naked eye.

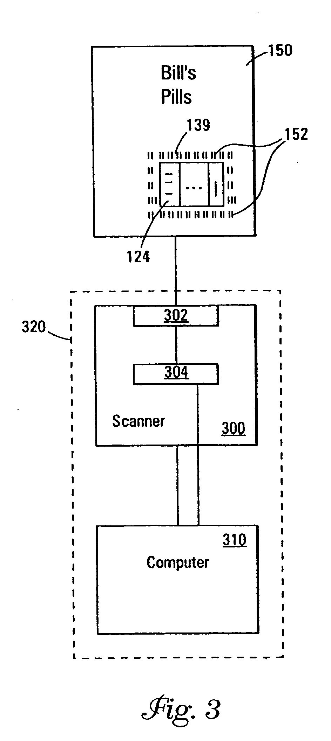

A scanner 300, such as a bar-code scanner, shown in Figure 3,scans machine-verifiable printed material 150. For one embodiment, scanner 300 is connected to a computer 310, such as a personal computer (PC) mainframe computer, network server, or the like. For another embodiment, computer 310 and scanner 300 are integral and form a scanning system 320. For yet another embodiment, scanner 300 is a portable scanner, such as a hand-held scanner that is removably connectable to computer 310. For another embodiment, scanning system 320 is a portable or a hand-held scanning system. For some embodiments, computer 310 is integral with or connected to a point-of-sale device, such as a point-of-sale (or checkout or sales) terminal. For other embodiments, scanner 300 is capable of detecting infrared or ultraviolet printing.

For some embodiments, computer-readable instructions that are supplied to a user of computer 310 on a removable computer-usable medium, such as a compact disc read-only memory (CD-ROM), are, for example, stored on a hard drive of computer 310. The computer-readable instructions cause computer 310 to perform various methods, such as controlling scanner 300. For another embodiment the computer-readable instructions are contained on a static or dynamic random access memory (SRAM or DRAM), electrically-erasable programmable ROM (EEPROM or flash memory), magnetic media, or optical media permanently or removably attached to computer 310.

Scanner 300 includes a scanning unit 302 that converts machine-verifiable printed material 150 into an analog data signal. For one embodiment, scanner 300 has a digitizer 304, such as an analog-to-digital converter, that converts the analog data signal into a digital data signal. The digital data corresponding to printed material 150 is transmitted to computer 310 for processing and analysis. For one embodiment, computer 310 converts the digital data corresponding to printed material 150 into gray scale data, such as a gray-scale bitmap.

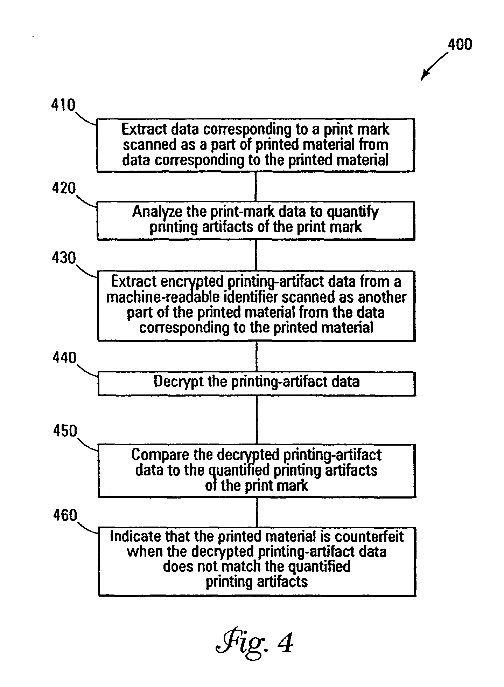

For one embodiment, the computer-readable instructions cause computer 310 to perform a method 400 for checking authenticity of printed material 150, as illustrated by the flowchart in Figure 4. At block 410, computer 310 extracts data (print-mark data) corresponding to print mark 124 from data corresponding to the scanned printed material 150. For some embodiments, the computer-readable instructions include the position vectors described above for locating print mark 124. Computer 310 analyzes the print-mark data at block 420 to quantify the printing artifacts of print mark 124, e.g., as described above in conjunction with the method 200 of Figure 2.

At block 430, computer 310 extracts encrypted printing-artifact data from machine-readable identifier 152 from the data corresponding to the scanned printed material 150. For some embodiments, scanner 300 includes the position vectors described above for locating machine-readable identifier 152, e.g., within the region 139. At block 440, computer 310 decrypts the print-artifact data, e.g., using the public encryption key discussed above.

At block 450, the decrypted printing-artifact data is compared to the quantified printing artifacts of print mark 124. When the decrypted printing-artifact data matches the quantified printing artifacts, printed material 150 is deemed to be genuine (or authentic). For some embodiments, a match between the decrypted printing-artifact data and the quantified printing artifacts occurs when the decrypted printing-artifact data and the quantified printing artifacts are within a predetermined percentage of each other, e.g. between about 0 and 50 percent of each other. This is because in the case of counterfeit printed material 150, the decrypted printing-artifact data and the quantified printing artifacts are often greater than about 50 percent of each other. When the decrypted printing-artifact data does not match the quantified printing artifacts, printed material 150 is deemed to be counterfeit, and computer 310 indicates that printed material 150 is counterfeit at block 460. For one embodiment, this involves computer 310 issuing a signal indicating that printed material 150 is counterfeit. For some embodiments, the signal is an electrical signal that activates an audible or visual (e.g., lighting of a lamp) alarm at the point-of-sale device. For other embodiments, the signal activates an audible or visual alarm of scanning system 320. For one embodiment, the signal causes the point-of-sale device to display a message indicative of counterfeit printed material.

### CONCLUSION

Although specific embodiments have been illustrated and described herein, it will be appreciated by those of ordinary skill in the art that any arrangement that is calculated to achieve the same purpose may be substituted for the specific embodiments shown. Many adaptations of the invention will be apparent to those of ordinary skill in the art.
Accordingly, this application is intended to cover any adaptations or variations of the invention. It is manifestly intended that this invention be limited only by the following claims and equivalents thereof.

## Claims

1. A method for producing machine-verifiable printed material (150), the method comprising:
extracting print-mark data corresponding to a print mark (124) on a hardcopy of printed material (120) from data corresponding to the hardcopy of printed material (120);
analyzing the print-mark data to quantify printing artifacts of the print mark (124) resulting from printing variations occurring during printing of the hardcopy of printed material (120);
encrypting the quantified printing artifacts;
encoding the encrypted printing artifacts into data corresponding to a machine-readable identifier (152); and
printing the machine-readable identifier (152) from the data corresponding to the machine-readable identifier ( 152) on the hardcopy of printed material (120).

2. The method of claim 1, wherein encrypting the quantified printing artifacts comprises using a private key that is linked to a public key used for decrypting the encrypted quantified printing artifacts.

3. The method of claim 1 or 2, wherein printing the machine-readable identifier (152) from the data corresponding to the machine-readable identifier (152) on the hardcopy of printed material (120) further comprises printing the machine-readable identifier (152) around a periphery (154) of the print mark (124).

4. A method for checking authenticity of printed material (150), the method comprising:
extracting print-mark data corresponding to a print mark (124) of the printed material (150) from data corresponding to the printed material (150);
analyzing the print-mark data to quantify printing artifacts of the print mark (124) resulting from printing variations occurring during printing of the printed material (150);
extracting encrypted printing-artifact data from a machine-readable identifier (152) of the printed material (150) from the data corresponding to the printed material (150);
decrypting the printing-artifact data from the machine-readable identifier (152);
comparing the decrypted printing-artifact data to the quantified printing artifacts of the print mark (124); and
indicating that the printed material (150) is counterfeit when the decrypted printing-artifact data does not match the quantified printing artifacts.

5. The method of claim 4, wherein the decrypted printing-artifact data matches the quantified printing artifacts when the decrypted printing-artifact data and the quantified printing artifacts are within a predetermined percentage of each other.

6. The method of claim 4 or 5, wherein decrypting the printing-artifact data comprises using a public key that is linked to a private key that was used to encrypt the printing-artifact data.

7. A scanning system (320) comprising:
a scanner (300) for scanning printed material (150) and outputting data corresponding to the printed material (150); and
a computer (310) connected to the scanner (300) that is adapted to perform a method in response to receiving the data corresponding to the printed material (150) from the scanner (300), the method comprising:
extracting print-mark data corresponding to a print mark (124) of the printed material (150) from the data corresponding to the printed material (150);
analyzing the print-mark data to quantify printing artifacts of the print mark (124) resulting from printing variations occurring during printing of the printed material (150);
extracting encrypted printing-artifact data from a machine-readable identifier (152) of the printed material (150) from the data corresponding to the printed material (150);
decrypting the printing-artifact data from the machine-readable identifier (152);
comparing the decrypted printing-artifact data to the quantified printing artifacts of the print mark (124); and
indicating that the printed material (150) is counterfeit when the decrypted printing-artifact data does not match the quantified printing artifacts.

8. The scanning system (320) of claim 7, wherein the scanning system (320) is a portable scanning system or a hand-held scanning system or is connected to a point-of-sale device.

9. An image processor (106) comprising:
a scanner (108) for scanning a hardcopy of printed material (120) having a print mark (124) and for outputting data corresponding to the printed material (120);
a computer (110) connected to the scanner (108) that is adapted to perform a method in response to receiving the data corresponding to the printed material (120) from the scanner (108), the method comprising:
extracting print-mark data corresponding to the print mark (124) from the data corresponding to the printed material (120);
analyzing the print-mark data to quantify printing artifacts of the print mark (124) resulting from printing variations occurring during printing of the printed material (120);
encrypting the quantified printing artifacts;
encoding the encrypted printing artifacts into data corresponding to a machine-readable identifier (152); and
converting the data corresponding to the machine-readable identifier (152) into printer-usable data.

10. The image processor (106) of claim 9, further comprising a printer (112) connected to the computer (110) for receiving the printer-usable data from the computer (110) and printing the machine-readable identifier (152) on the hardcopy of printed material (120).
